# EUROPEAN PATENT APPLICATION

(11) **EP 4 793 872 A1**
(43) Date of publication of application: **19.08.2026**
(21) Application number: 24888957.8
(22) Date of filing: 14.10.2024
(51) Int. Cl.: G06Q 50/10, G06F 18/22, G06Q 30/06, G06Q 30/02

(54) **COMPUTING DEVICE AND OPERATION METHOD THEREFOR**

(30) Priority: 07.11.2023 KR 20230153104
(71) Applicant: Samsung Electronics Co., Ltd., Suwon-si, Gyeonggi-do 16677 (KR)
(72) Inventor: AHN, Kwanki, Suwon-si, Gyeonggi-do 16677 (KR); BAEK, Injune, Suwon-si, Gyeonggi-do 16677 (KR)
(74) Representative: Appleyard Lees IP LLP
(86) International application number: PCT/KR2024/015519
(87) International publication number: WO 2025/100763

(57) **Abstract**

A computing device according to the present disclosure includes memory storing at least one instruction and at least one processor configured to execute the at least one instruction stored in the memory, wherein the at least one processor may obtain a similarity between heterogeneous content based on user-specific heterogeneous content consumption information obtained from category-specific content consumption information, and may determine a second content item of a second category different from a first category, as recommended content for a user who has consumed a first content item of the first category, based on the similarity between the heterogeneous content.

## Description

### Technical Field

Various embodiments disclosed herein relate to a computing device and an operating method thereof, and more particularly, a computing device for recommending content, and an operating method thereof.

### Background Art

A recommender system is a system that recommends movies, games, products, or the like to a user. Internet shopping sites or online content providing sites may recommend new content to a user based on the user's product purchase history, movie viewing history, or the like.

### Disclosure of Invention

### Solution to Problem

A computing device according to an embodiment may include memory storing at least one instruction and at least one processor configured to execute the at least one instruction stored in the memory.

In an embodiment, the at least one processor may obtain a similarity between heterogeneous content based on user-specific heterogeneous content consumption information obtained from category-specific content consumption information.

In an embodiment, the at least one processor may determine a second content item of a second category as recommended content for a user who has consumed a first content item of a first category, based on the similarity between the heterogeneous content.

### Brief Description of Drawings

FIG. 1 is a drawing illustrating a memory-based collaborative filtering method.
FIG. 2 is a drawing illustrating a matrix factorization method of a model-based collaborative filtering method.
FIG. 3 illustrates a computing device obtaining category-specific content consumption information and transmitting information corresponding to recommended content to an external device, according to an embodiment.
FIG. 4 is a drawing illustrating a computing device recommending heterogeneous content to a user by using category-specific content consumption information, according to an embodiment.
FIG. 5 is a block diagram of a computing device according to an embodiment.
FIG. 6 is a block diagram of a computing device according to an embodiment.
FIG. 7 is an internal block diagram of a processor according to an embodiment.
FIG. 8 is a drawing illustrating a computing device obtaining user-specific heterogeneous content consumption information, according to an embodiment.
FIG. 9 is a drawing illustrating a computing device obtaining a similarity matrix by using a normalized integrated matrix of FIG. 8, according to an embodiment.
FIG. 10 is a drawing illustrating a computing device performing data augmentation, according to an embodiment.
FIG. 11 is an internal block diagram of a processor according to an embodiment.
FIG. 12 is a drawing illustrating a computing device performing data augmentation, according to an embodiment.
FIG. 13 is a computing device obtaining user-specific heterogeneous content consumption information, according to an embodiment.
FIG. 14 is a drawing illustrating a computing device obtaining a similarity matrix by using a normalized integrated matrix of FIG. 13, according to an embodiment.
FIG. 15 is a flowchart illustrating an operating method of a computing device, according to an embodiment.
FIG. 16 is a flowchart illustrating an operating method of a computing device, according to an embodiment.
FIG. 17 is a flowchart illustrating a method, performed by a computing device, of performing data augmentation, according to an embodiment.

### Mode for the Invention

An operating method of a computing device according to an embodiment may include obtaining a similarity between heterogeneous content based on user-specific heterogeneous content consumption information obtained from category-specific content consumption information.

In an embodiment, the operating method of the computing device may include determining a second content item of a second category as recommended content for a user who has consumed a first content item of a first category, based on the similarity between the heterogeneous content.

A recording medium according to an embodiment may be a computer-readable recording medium having recorded thereon a program for executing an operating method of a computing device performed by a computer, the operating method including obtaining a similarity between heterogeneous content based on user-specific heterogeneous content consumption information obtained from category-specific content consumption information.

In an embodiment, the recording medium may be the computer-readable recording medium having recorded thereon the program for executing the operating method of the computing device performed by the computer, the operating method including determining a second content item of a second category as recommended content for a user who has consumed a first content item of a first category, based on the similarity between the heterogeneous content.

Throughout the present disclosure, the expression "at least one of a, b or c" indicates only a, only b, only c, both a and b, both a and c, both b and c, all of a, b, and c, or variations thereof.

Hereinafter, an embodiment of the present disclosure will be described in detail with reference to the accompanying drawings to allow one of ordinary skill in the art to easily carry out the embodiment of the present disclosure. However, the present disclosure may be implemented in various different forms and is not limited to the embodiment described herein.

Although the terms used in the present disclosure are described using currently used general terms in consideration of their functions mentioned in the present disclosure, the terms may refer to various other terms according the intention of one of ordinary skill in the art, a precedent, or the advent of new technology. Therefore, the terms used in the present disclosure should not be interpreted solely based on their names, but the terms should be interpreted based on the meaning of the terms and content throughout the present disclosure.

In addition, the terms used in the present disclosure are merely used to describe particular embodiments, and are not intended to limit the present disclosure.

Throughout the specification, when a portion is referred to as being "connected to" another portion, the portion may be "directly connected to" the other portion, or the portion may also be "electrically connected to" the other portion with an intervening element therebetween.

The terms "the" and similar referents used in the present specification, especially in the following claims, are to be construed to cover both the singular and the plural. In addition, unless the order of steps for describing a method according to the present disclosure is explicitly specified, the steps described herein may be performed in any suitable order. The present disclosure is not limited to the described order of the steps.

Phrases such as "in some embodiments" or "in an embodiment" appearing in various places in the present specification are not necessarily all referring to the same embodiment.

Some embodiments of the present disclosure may be represented by functional block configurations and various processing steps. Some or all of these functional blocks may be implemented in hardware and/or software configuration of the various number of executing a particular function. For example, functional blocks of the present disclosure may be implemented by one or more microprocessors, or by circuit configurations for a predetermined function. In addition, for example, functional blocks of the present disclosure may be implemented in various programming or scripting languages. Functional blocks may be implemented by algorithms executed in one or more processors. In addition, the present disclosure may adopt related-art technology for electronic environment set-up, signal processing, and/or data processing. Terms such as "mechanism", "element", "means," and "configuration" may be used broadly, and are not limited to mechanical and physical configurations.

In addition, the connecting lines or connecting members between components shown in the drawings are merely intended to represent exemplary functional connections and/or physical or circuit connections. In a practical device, connections between components may be represented by alternatives or various additional functional connections, physical connections, or circuit connections.

In addition, the terms such as "unit," "module," etc. used in the specification indicate a unit, which processes at least one function or operation, and the unit may be implemented by hardware or software, or by a combination of hardware and software.

In addition, the term "user" in the specification refers to a person who uses an electronic device or a computing device and may include a consumer, an evaluator, a viewer, a manager, or an installation engineer.

Hereinafter, the present disclosure will now be described in detail with reference to the accompanying drawings.

A collaborative filtering (CF) system, which is one of the most widely used methods in recommender systems, is a method that recommends an item by relying on a user's behavior pattern. The CF system may include a memory-based method and a model-based method.

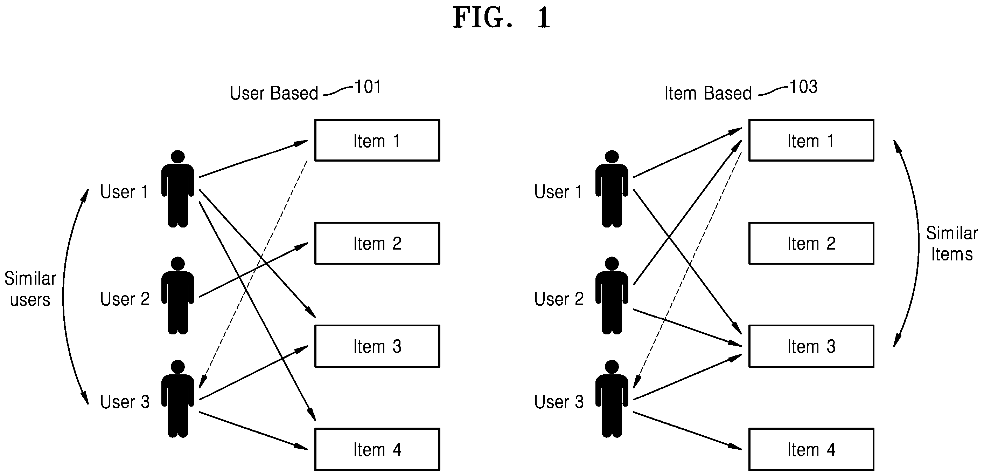

FIG. 1 is a drawing illustrating a memory-based CF method.

The memory-based CF method is a method of recommending an item that a user has not yet consumed, based on a relationship between items or between users.

The memory-based CF method is a method of storing a similarity between users or between items in memory, and then, when a recommendation is required to be made to a particular user, recommending, to the particular user, items that k users similar to the corresponding user have consumed. Alternatively, the memory-based CF method is a method of, when a rating prediction for a particular item is required, estimating a rating of the particular item based on ratings of k items similar to the corresponding item.

FIG. 1 is a drawing in which reference numeral 101 denotes a user-based method of the memory-based CF method.

The user-based method is a method of searching for a user who has a similar preference to a particular user and recommending, to the particular user, content used by the user with the similar preference.

Reference numeral 101 indicates that user 1 has consumed item 1, item 3, and item 4, user 2 has consumed item 2, and user 3 has consumed item 3 and item 4.

The user-based method assumes that, because both user 1 and user 3 have consumed at least a certain number of same items, for example, two common items, item 3 and item 4, the two users have similar preferences. The user-based method may recommend, to user 3, item 1, which is an item consumed by user 1 who has a similar preference to user 3.

FIG. 1 is a drawing in which reference numeral 103 denotes an item-based method of the memory-based CF method.

The item-based method is a method of recommending, to the user, content similar to content used by a user, by using a similarity between content.

Reference numeral 103 indicates that each of user 1 and user 2 has consumed item 1 and item 3, and user 3 has consumed item 3 and item 4.

The item-based method may identify a similarity between items and may recommend, to a user who has consumed an item, another item similar to the item. For example, according to reference numeral 103, the item-based method may assume that, because a plurality of users have consumed item 1 and item 3 together, item 1 and item 3 are similar, and may recommend item 3 to user 3 who has consumed item 1 but not item 3.

There is an issue that the memory-based CF method described in FIG. 1 has low performance when data isn't sufficiently accumulated.

The model-based CF method generates a model by training the model in advance using raw data and recommends items using the trained model. The model-based CF method may include a matrix factorization method and a method using a machine learning algorithm.

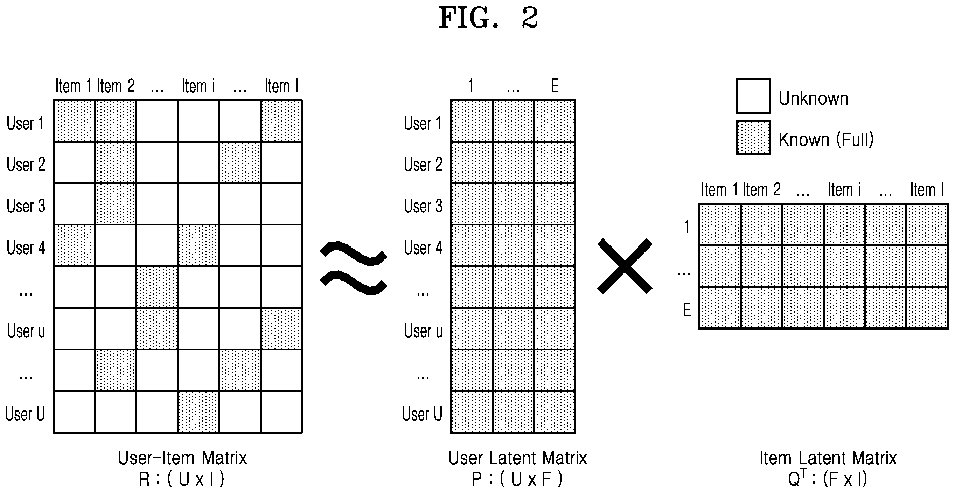

FIG. 2 is a drawing illustrating a matrix factorization method of a model-based CF method.

In FIG. 2, R represents a rating matrix, P represents a user latent matrix, and Q represents an item latent matrix. The matrix factorization method is based on the concept that, when P, which is the user latent matrix, is multiplied by an inverse matrix of Q, which is the item latent matrix, to generate R^, an approximation of an original user-item rating matrix may be obtained.

The filtering method using machine learning, of the model-based CF method, is a method of learning characteristics (preferences) of each item and user via associations between items and users. In this method, user vectors and item vectors are converted into one-hot vectors, which are then compressed into embedding vectors, i.e., latent vectors, and the user latent vectors and item latent vectors obtained via dimensional reduction are concatenated and used as an input for a neural network.

The filtering method using machine learning converts input data into a result value through a neural network including a plurality of layers and obtains, as a final result value, a probability value between 0 and 1 obtained by applying a sigmoid non-linear activation function to the result value. This method reuses some layers of the neural network in another domain, based on transfer learning. In other words, this method aims to obtain learning performance of a high result in another domain, with a small amount of data by reusing some of weight values (a latent factor layer) of a network trained in one domain.

Both the matrix factorization method and the filtering method using machine learning are based on the fundamental premise that users and content are each mapped to latent factors (embedding layers). In other words, the latent factors project characteristics of users and characteristics of content into one-dimensional vectors, respectively, via neural network training. When user latent factor values are similar, i.e., when a distance between vectors is small, users are considered similar.

The model-based CF method assumes that, by appropriately learning metadata of content in another domain via machine learning, a characteristic vector may be generated based on the same criteria. However, this carries a risk that overall recommendation quality may be significantly degraded by quality of the metadata.

Furthermore, even when the quality of the metadata is good, there is an issue that active human intervention is required to perform data preprocessing prior to machine learning. For example, when cross-recommending heterogeneous content such as a movie and music, a developer's value judgement inevitably intervenes in determining to which music genre a documentary movie is required to be mapped. Likewise, in a case heterogeneous content is a movie and games, when a movie is of a comedy or a romantic genre, there is an issue of lack of objectivity because a developer is required to judge to determine a game genre corresponding to such a genre.

In addition, existing recommendations between heterogeneous content rely on the assumption that content metadata between heterogeneous domains may be projected onto a same embedding space, but there is an issue that such assumption is uncertain because accuracy may not be precisely measured.

Furthermore, there is an issue that the method using machine learning, of the model-based CF method, requires a large amount of computation, resulting in high complexity and an increase in time consumption.

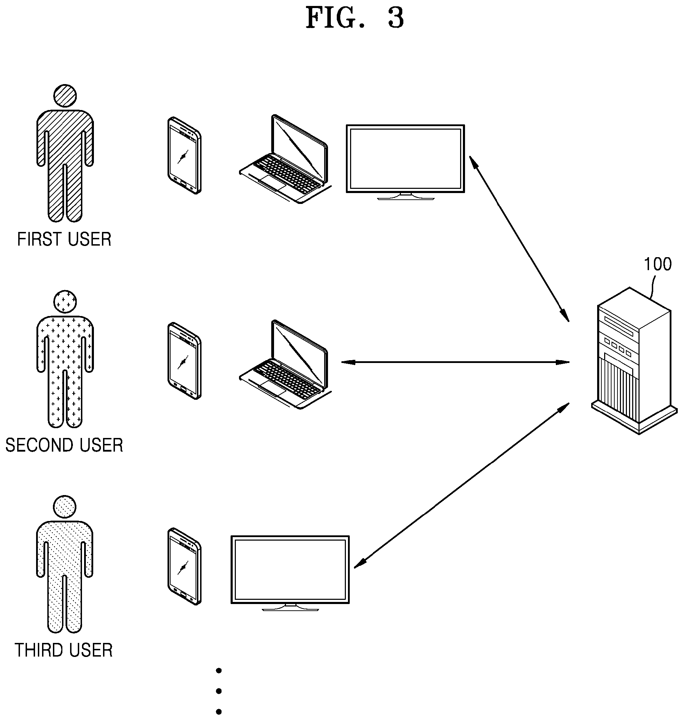

FIG. 3 illustrates a computing device 100 obtaining category-specific content consumption information and transmitting information corresponding to recommended content to an external device, according to an embodiment.

In an embodiment, the computing device 100 may be a server that provides a recommendation result by using a recommender system.

In an embodiment, the computing device 100 may communicate with at least one external device. An external device may be referred to as a user terminal.

In an embodiment, the external device may be implemented as an electronic device in various forms, which is capable of communicating with the computing device 100 by wire or wirelessly.

The external device may be an image display device capable of outputting an image or a video via a display or may be a sound device capable of outputting audio. The external device may be of a stationary type or a portable type.

In an embodiment, the external device may include at least one of a television (TV), a desktop computer, a smartphone, a tablet personal computer (PC), a game console, a sound device, a mobile phone, a video phone, an e-book reader, a laptop PC, a netbook computer, a digital camera, a personal digital assistant (PDA), a portable multimedia player (PMP), a camcorder, a navigation device, a wearable device, a smart watch, a home network system, a security system, or a medical device.

When the external device is an image display device, the external device may be implemented not only as a flat display device but also implemented as a curved display device which is a screen having curvature or a flexible display device for which curvature is adjustable. An output resolution of the external device may have various resolutions such as high definition (HD), full HD, ultra HD, or definition clearer than ultra HD.

In an embodiment, when the external device is a TV, the external device may include a digital TV in which an operating system (OS) and an Internet access function are embedded.

The external device may output various forms of content provided by content providers.

A content provider may refer to a terrestrial broadcasting station, a cable broadcasting station, a satellite broadcasting station, an Internet protocol television (IPTV) service provider, or an over-the-top (OTT) service provider, which provides various content to consumers, a server operator providing various types of content, or the like.

Content may have various forms, such as a still image, a video such as a moving picture, audio, a subtitle, or other auxiliary information. The content may include viewing content such as movies or dramas, listening content such as music, game content, and artwork content that guides or introduces works of art such as masterpieces or sculptures.

In an embodiment, the external device may receive and output various content generated by the content provider, via an external device (not shown). For example, the external device may be implemented as a source device in various forms, such as a PC, a set-top box, a Blu-ray disc player, a mobile phone, a game console, a home theater, an audio player, or a USB.

The external device may be connected to an external device via a wired communication network such as a high-definition multimedia interface (HDMI) or via a wireless communication network, and may provide various content to the external device. The external device may receive and output video on demand (VOD) content provided by an IPTV service provider or an OTT service provider, via a set-top box. A VOD service refers to a service that provides a user-desired video at a user-desired time via communication network connection, and may indicate various forms of content provided by an OTT service provider or an IPTV service provider. The IPTV service provider or the OTT service provider may provide not only VOD content but also real-time broadcast programs.

In an embodiment, when the OS is embedded in the external device, the external device may stream and output, in addition to the real-time broadcast programs, various forms of VOD content generated by an OTT service provider, by using the OS embedded therein.

In an embodiment, the external device may access the Internet and may provide a web surfing service, a social network service, or the like. In addition, the external device may perform a communication center function capable of checking news, weather, emails, etc., in real time.

In an embodiment, the external device may execute various forms of applications. The external device may have installed therein various types of applications as a default. Alternatively, the external device may access the Internet, may search for a user-request application, and may install the application, under the control of a user. The external device may execute the application and may provide various services.

In an embodiment, the external device may be wirelessly connected to an external device and/or the computing device 100 such as a set-top box via a wireless network following a communication standard such as Bluetooth, a wireless LAN (WLAN) (Wi-Fi), wireless broadband (Wibro), Worldwide Interoperability for Microwave Access (Wimax), CDMA, or WCDMA, and may receive an image signal from the external device.

In an embodiment, the external device may be connected to an external device via a wired cable, and may receive an image signal from the external device or may transmit an image signal to the external device. The wired cable may include a port, such as an HDMI, a universal serial bus (USB), a display port (DP), or a Thunderbolt^{™}, capable of transmitting simultaneously transmitting a video signal and an audio signal. Alternatively, the wired cable may include a port for separately transmitting a video signal and an audio signal.

In an embodiment, the external device may be implemented as an electronic device not including an image display device such as a display. For example, when the external device is an external device itself such as an Internet receiving device that receives content from a set-top box, a satellite broadcast receiver, or an OTT service provider, the external device may be in the form without an image display device.

In this case, the external device may be connected to an image display device by wire and may transmit, to the image display device, a signal input by an external source. For example, the external device may be connected to the image display device by using a port, such as a USB, an HDMI, a DP, or a Thunderbolt^{™}, capable of simultaneously transmitting a video signal and an audio signal. Alternatively, the external device may be connected to the image display device by using a port for separately transmitting a video signal and an audio signal.

In an embodiment, the external device may be controlled by a control device. In an embodiment, the control device may be a device, such as a remote controller, used to control the external device. A user may control various functions of the external device by using the control device.

In an embodiment, the control device may be a control device dedicated to the external device. Alternatively, in an embodiment, the control device may be an electronic device, such as a smartphone or an AI speaker, which performs other operation as a main function, other than an operation of controlling the external device. In this case, the user may install a remote-controller application in the control device, and thus, may control the external device by using the control device. In this case, the control device may include a Wi-Fi, Bluetooth, or infrared communication module. The control device may transmit or receive data to or from the external device by using the Wi-Fi, Bluetooth, or infrared communication module.

In an embodiment, the control device may include an input part. The input part may receive a user input for controlling the external device. The input part included in the control device may include a plurality of keys. A key may have various forms such as a physical button for receiving a user's push operation, a jog and shuttle, or a touch button displayed on a touchpad for sensing a touch. The user may control various functions of the external device by using the plurality of keys included in the control device.

The plurality of keys included in the control device may be used to control the various functions of the external device.

However, the present disclosure is not limited thereto, and in an embodiment, at least one of the external device or the control device may include a microphone capable of receiving a user's speech input. When the control device includes the microphone, the microphone may receive a user's analog speech signal, may convert the same by digitizing, and may transmit the digitized signal to the external device. In an embodiment, the control device may receive a user's speech signal via the microphone, may convert the same by digitizing, and may transmit the digitized speech signal to the external device by using a data transmission communication scheme such as Bluetooth or Wi-Fi. In an embodiment, when the external device includes the microphone, the microphone may collect a user's speech signal, may convert the same by digitizing, and may transmit the digitized signal to a processor.

In an embodiment, a user may consume/use content by using the external device.

In the present disclosure, consuming content may mean using the content in accordance with the intended purpose thereof.

For example, when the content is a movie or a drama, consuming content may mean watching, playing, or purchasing the movie or the drama.

When the content is a masterpiece, consuming content may mean appreciating the masterpiece or purchasing the masterpiece or a masterpiece-related item.

When the content is a product, consuming content may mean purchasing the product.

When the content is a game, consuming content may mean purchasing or playing the game.

In addition, making a payment to use a movie or a game, or making a payment to purchase a masterpiece or masterpiece-related goods, may also be considered as consuming content.

Furthermore, indicating a preference for content or scoring the content may also be considered as consuming content.

A user may consume content via various methods by using the external device.

For example, when the external device is a TV, the user may watch particular content by changing a channel by using the external device.

When the external device is an electronic device having an Internet function, such as a mobile phone or a laptop PC, the user may use the external device to consume movie content by reserving a movie via the Internet or to play a game by accessing a game application. The user may purchase an item via internet shopping by using the external device.

When the external device is a TV, a mobile phone, a laptop PC, or the like, the user may watch a movie or a drama by accessing an application by using the external device.

The user may appreciate a work by viewing content related to a painting or a work by using the external device or may listen to music via the external device.

The user may receive and watch a movie or a drama via the external device connected to the computing device 100.

In an embodiment, a history of the user using/consuming content by using the external device may be transmitted to the computing device 100 via a communication network.

Hereinafter, a history of consumption of content of the user or the external device will be referred to as content consumption information. In an embodiment, the content consumption information may include information identifying content that has been consumed and information indicating a consumption level for the identified content.

In an embodiment, the external device may collect content consumption information and may transmit the same to the computing device 100 via a communication network.

In an embodiment, instead of the external device collecting the content consumption information, the computing device 100 may collect content consumption information for content consumed by the external device.

In an embodiment, the external device may collect content consumption information and may transmit the same to the computing device 100, and the computing device 100 may also collect content consumption information corresponding to content consumed by the external device.

In an embodiment, the external device and/or the computing device 100 may obtain context information from a screen currently being output by the external device. The context information may include, for example, a channel name, a channel number, or a title of content.

In an embodiment, the external device and/or the computing device 100 may obtain the context information by capturing a screen at regular time intervals and performing object detection on the captured screen.

In an embodiment, the external device and/or the computing device 100 may obtain content consumption information from the context information.

In an embodiment, the external device and/or the computing device 100 may recognize content being output by the external device, by using an automatic content recognition (ACR) function, and may collect content consumption information therefrom.

In an embodiment, the external device and/or the computing device 100 may obtain a characteristic from an image, audio, or a video by using a watermark technology or a finger printing technology, may compare the same with a sample, and thus, may identify content to obtain content consumption information.

In an embodiment, the external device and/or the computing device 100 may obtain information about content currently being output, from a digital stream provided by various OTT service providers, a broadcasting station server, or the like, and based on the same, may obtain content consumption information.

In an embodiment, the external device and/or the computing device 100 may collect content consumption information continuously, at regular time intervals, or whenever a user uses new content.

In an embodiment, the external device and/or the computing device 100 may update content consumption information periodically or whenever a user uses new content.

In an embodiment, the computing device 100 may obtain category-specific content consumption information from at least one external device.

A user may consume/use content by using one or more external devices.

For example, as shown in FIG. 3, a first user may use content by using external devices, that is, a mobile phone, a laptop PC, and a TV. A second user may use content by using external devices, that is, a mobile phone and a laptop PC, and a third user may use content by using external devices, that is, a mobile phone and a TV.

In an embodiment, when a same user has consumed different content items by using a plurality of external devices, the computing device 100 may group and manage consumption information for the different content items consumed by the user, by using the user's ID or account.

For example, when the first user has consumed various content by using a plurality of external devices, that is, a mobile phone, a laptop PC, and a TV, the computing device 100 may manage content consumption information for content consumed by the first user via the plurality of external devices, by using the first user's user account.

In the present disclosure, a category may refer to a collective unit in which content items to be consumed are classified based on common characteristics. The category may be referred to as an item or a domain. The category may include content that is classified under the corresponding category. The content may be classified into the category to which the content belongs. For example, the content may be classified into at least one category such as movies, games, works of art, or sales items (products, goods).

In an embodiment, the category-specific content consumption information may refer to consumption information for content belonging to a same category, according to each of various categories.

For example, when the category is movies, the category-specific content consumption information may include consumption information for N different movie content items. In addition, when the category is games, the category-specific content consumption information may include consumption information for M different game content items.

In an embodiment, the computing device 100 may obtain user-specific heterogeneous content consumption information from the category-specific content consumption information. The user-specific heterogeneous content consumption information may refer to consumption information for content of different categories consumed by a user, according to each user. For example, the heterogeneous content consumption information may be consumption information for content of different categories consumed by the first user when the first user has consumed the content of different categories, such as a movie and a game.

In an embodiment, the computing device 100 may obtain, from the user-specific heterogeneous content consumption information, a consumption vector including consumption information of a plurality of users as elements, according to each content item included in each category.

In an embodiment, the computing device 100 may obtain a similarity between heterogeneous content by comparing consumption vectors for content included in different categories.

For example, the computing device 100 may obtain the similarity between the heterogeneous content by comparing a consumption vector for M content items included in a first category with a consumption vector for N content items included in a second category different from the first category.

In an embodiment, the computing device 100 may normalize the user-specific heterogeneous content consumption information. For example, when consumption information for a movie is expressed as a movie viewing time, but consumption information for a game is expressed as the number of game plays, the time and the number have different ranges and thus are difficult to compare. Accordingly, the computing device 100 may normalize consumption information, which is expressed in different units according to each category, to values within a certain range, to facilitate comparison between heterogeneous content consumption information.

In an embodiment, the computing device 100 may obtain consumption vectors for content included in different categories by using the normalized user-specific heterogeneous content consumption information, and may obtain a similarity between heterogeneous content by comparing the consumption vectors for the heterogeneous content.

In an embodiment, the computing device 100 may determine content included in a second category as recommended content for a user who has consumed content included in a first category, based on the similarity between the heterogeneous content.

In an embodiment, the computing device 100 may generate information corresponding to the determined recommended content.

In an embodiment, the information corresponding to the recommended content may include at least one of information for identifying the recommended content and information for using the recommended content.

For example, the information corresponding to the recommended content may include at least one of a title of the recommended content, or a link address on an external server or external OTT service provider server through which the recommended content is available.

In an embodiment, the information corresponding to the recommended content may further include a reason for recommending the content.

In an embodiment, the computing device 100 may transmit the information corresponding to the recommended content to an external device of the user.

In an embodiment, when the external device is a TV and the computing device 100 is a server dedicated to the TV, the computing device 100 may easily obtain consumption information for content consumed by the user via the TV.

The computing device 100 may recommend content corresponding to various forms of modes that the TV may provide, based on the consumption information for the content consumed by the user. For example, it is assumed that the TV may provide content according to each mode, such as, a viewing mode, a game mode, an art mode, and a shopping mode.

The computing device 100 may identify histories of the user watching a movie or drama, playing a game, appreciating an artwork, consuming a product, etc., by using the TV.

When the user uses the TV in the viewing mode, the computing device 100 may recommend, as the recommended content, a particular movie or a particular drama, which is determined based on content consumption information of the user and a similarity between heterogeneous content.

When the user switches the TV to the art mode, the computing device 100 may recommend a particular artwork determined based on content consumption information of the user and a similarity between heterogeneous content.

As such, according to an embodiment, the computing device 100 may collect category-specific content consumption information of a plurality of users and may obtain user-specific heterogeneous content consumption information therefrom.

According to an embodiment, the computing device 100 may obtain a similarity between heterogeneous content by using information of a user who has consumed the heterogeneous content, without using metadata.

In addition, according to an embodiment, the computing device 100 may rapidly determine recommended content with a small amount of computation by recommending heterogeneous content by using user-specific heterogeneous content information, without using a complex neural network.

However, the present disclosure is not limited thereto, and the external device may autonomously perform a function of recommending recommended content, rather than receiving recommended content from the computing device 100 based on a cloud.

When the external device includes an on-device engine, the external device may directly obtain a recommendation result by using the on-device engine.

For example, the external device may download category-specific content consumption information of a plurality of users from an external server, etc. and store the same, and then, may directly obtain a recommendation result based on content consumption information of a user periodically, at random time intervals, or whenever the user consumes new content. The external device may autonomously collect and process information without passing through a cloud server, and thus, may rapidly provide the recommendation result to the user.

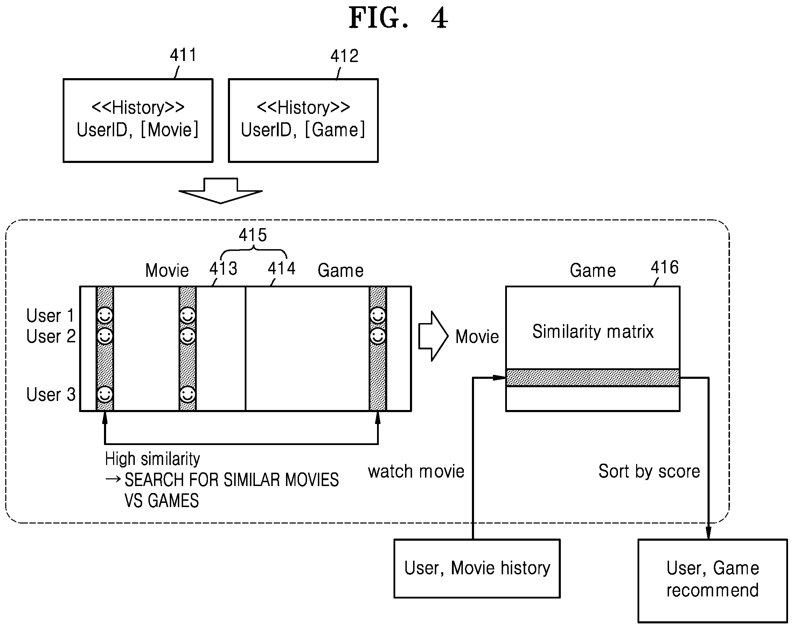

FIG. 4 is a drawing illustrating the computing device 100 recommending heterogeneous content to a user by using category-specific content consumption information, according to an embodiment.

In an embodiment, the computing device 100 may obtain category-specific content consumption information from a plurality of external devices.

In an embodiment, the content consumption information may include information identifying content that has been consumed and information indicating a consumption level for the content.

In an embodiment, the content consumption information may include information identifying content that has been consumed by a user. The information identifying the content may include, for example, at least one of a content unique number, a unique ID, or a title of the content.

In an embodiment, the content consumption information may include information indicating a consumption amount or a consumption level of the user for the content. For example, the content consumption information may include at least one of whether the user has consumed the content, a consumption time, or the number of times the content has been consumed.

In an embodiment, the content consumption information may further include at least one of the user's ID or account, user profile information, or identification information of an external device used by the user.

In an embodiment, when a same user has consumed a plurality of content items by using a plurality of user terminals, the computing device 100 may group and manage consumption information for the plurality of content items consumed by the same user, by using the user's ID or account.

For example, the computing device 100 may collect consumption information for content consumed by a same user via a plurality of external devices, by mapping and using external device identification information, such as an IP address of an external device, and a user ID or account, email address, etc. logged into the external device.

FIG. 4 illustrates a case in which the computing device 100 obtains first content item consumption information 411, which is consumption information for content of a movie category, and second content item consumption information 412, which is consumption information for content of a game category.

The first content item consumption information 411 may include consumption information of a plurality of users with respect to movie content items when the category is movies. For example, the first content item consumption information 411 may include IDs of the plurality of users, identification information of a movie viewed by each user, movie viewing times or view counts, ratings of the movie, etc.

The second content item consumption information 412 may include consumption information of the plurality of users with respect to game content items when the category is games. For example, the second content item consumption information 412 may include IDs of the plurality of users, identification information of a game played by each user, game play times or the number of game plays, ratings of the game, etc.

FIG. 4 illustrates an example in which the computing device 100 obtains consumption information for content of movie and game categories, but this is one embodiment, and the computing device 100 may obtain consumption information for content of various other categories. For example, the computing device 100 may obtain consumption information for various shopping content classified into a shopping category and various artwork or masterpiece content included in an artwork category.

In an embodiment, the computing device 100 may obtain a first matrix 413 expressing consumption information for movie content consumed by each user, by processing the first content item consumption information 411.

For example, as shown in FIG. 4, the computing device 100 may generate, as the first matrix 413, a matrix including the users and movie content as elements. The first matrix 413 may be a matrix in the form including the plurality of users as rows and the movie content as columns.

Similarly, the computing device 100 may generate a second matrix 414 expressing consumption information for game content consumed by each user, by processing the second content item consumption information 412. The second matrix 414 may be a matrix in the form including the plurality of users as rows and the game content as columns.

In an embodiment, the computing device 100 may obtain user-specific heterogeneous content consumption information, by using content consumption information with respect to different categories together.

For example, the computing device 100 may generate an integrated matrix 415 representing the user-specific heterogeneous content consumption information, by listing the first matrix 413 and the second matrix 414 for each identical user.

In an embodiment, the integrated matrix 415 may be a matrix formed by integrating the first matrix 413 and the second matrix 414 for each user. The integrated matrix 415 may be a matrix in the form including the plurality of users as rows and the movie content and the game content as columns. In other words, the integrated matrix 415 may be a table in the form in which movie content consumption information and game content consumption information of a same user are listed in a row.

The integrated matrix 415 may include, as an element, a content consumption level of a user.

In an embodiment, the computing device 100 may obtain a consumption vector from the integrated matrix 415. In an embodiment, the consumption vector may be a vector including consumption information of the plurality of users as elements, according to each content item included in each category.

For example, the computing device 100 may obtain, for each of a plurality of movies, a movie consumption vector including, as elements, consumption information of the plurality of users with respect to each movie.

In addition, the computing device 100 may obtain, for each of a plurality of games, a game consumption vector including, as elements, consumption information of the plurality of users with respect to each game.

In an embodiment, the computing device 100 may obtain a similarity between vectors by comparing a plurality of movie consumption vectors with a plurality of game consumption vectors.

In an embodiment, the computing device 100 may generate a similarity matrix 416 including heterogeneous content of the movies and the games respectively as rows and columns.

For example, the similarity matrix 416 may be a matrix which includes a plurality of movie content items as rows, includes a plurality of a plurality of game content items as columns, and includes a similarity between a movie and a game as an element.

In an embodiment, the computing device 100 may recommend heterogeneous content to a user by using the similarity matrix 416.

For example, the computing device 100 may identify, by using content consumption information of a recommendation target user, movie content consumed by the user, and may determine game content, which has a high similarity to the movie content consumed by the user, as recommended content to recommend to the user.

FIG. 4 illustrates an example in which the computing device 100 obtains consumption information for content of two categories, that is, the movie category and the game category, but this is one embodiment, and the computing device 100 may obtain consumption information for content of more various categories.

For example, he computing device 100 may obtain consumption information with respect to each of a movie category, a game category, a shopping category, and an artwork category.

In this case, the computing device 100 may generate an integrated matrix representing user-specific heterogeneous content consumption information, by using content consumption information for content included in a plurality of different categories, that is, the movie category, the game category, the shopping category, and the artwork category, together.

In this regard, the integrated matrix may be a matrix in the form including a plurality of users as rows and including movie content, game content, shopping content, and artwork content as columns.

The computing device 100 may obtain a consumption vector for each of a plurality of content items included in each category, and may obtain a similarity between vectors by comparing consumption vectors of heterogeneous content.

The computing device 100 may generate a similarity matrix including different content items of the four categories as rows and columns via various methods.

For example, the similarity matrix may include a plurality of movie content items and a plurality of game content items as rows, and may include a plurality of shopping content items and a plurality of artwork content items as columns. In this case, the similarity matrix may be a matrix including, as elements, a similarity between the movie content and the shopping content, a similarity between the movie content and the artwork content, a similarity between the game content and the shopping content, and a similarity between the game content and the artwork content.

The computing device 100 may determine, based on content consumption information of a user, shopping content and/or artwork content having a high similarity to game content consumed by the user as content to be recommended to the user when the user has consumed the game content.

In the related art, homogeneous content has been recommended by using only homogeneous content consumption information. For example, in the related art, based on information on users' consumption of movie content, another movie, which has a high similarity to a movie viewed by a recommendation target user, has been recommended to the recommendation target user.

In contrast, according to the present disclosure, the computing device 100 may obtain user-specific heterogeneous content consumption information by using category-specific content consumption information of a plurality of users. In other words, the computing device 100 may obtain user-specific heterogeneous content consumption information by using category-specific content consumption information of a plurality of users, without a limitation on the type of categories or the number of categories.

According to the present disclosure, the computing device 100 may obtain similarity between content of different categories by using heterogeneous content consumption information of a plurality of users, and may recommend, by using the same, heterogeneous content of various categories to a recommendation target user.

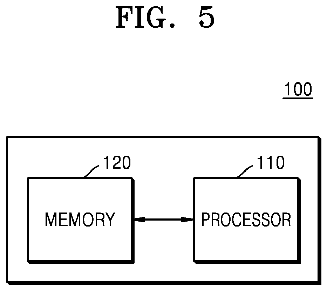

FIG. 5 is a block diagram of the computing device 100 according to an embodiment.

The computing device 100 of FIG. 5 may be an example of the computing device 100 described with reference to FIG. 3 or 4.

Referring to FIG. 5, the computing device 100 may include memory 120 and a processor 110.

In an embodiment, the memory 120 may store at least one instruction. The memory 120 may store at least one program to be executed by the processor 110. In addition, the memory 120 may store data input to the computing device 100 or output from the computing device 100.

The memory 120 may include at least one type of storage medium from among flash memory, a hard disk, a multimedia card micro, a memory card (for example, SD or XD memory), random access memory (RAM), static random access memory (SRAM), read-only memory (ROM), electrically erasable programmable read-only memory (EEPROM), programmable read-only memory (PROM), magnetic memory, a magnetic disk, and an optical disc.

In an embodiment, the memory 120 may store one or more instructions for obtaining category-specific content consumption information from at least one external device.

In an embodiment, the memory 120 may store one or more instructions for, when the same user has consumed different content items using a plurality of user terminals, managing consumption information for the different content items consumed by the user together using the user's ID or account.

In an embodiment, the memory 120 may store category-specific content consumption information obtained from at least one external device and/or consumption information for different types of content for each user, classified by a user's ID or account.

The category-specific content consumption information and/or the user-specific heterogeneous content consumption information may be updated at certain intervals, at random times, or whenever category-specific content consumption information is obtained from a user.

In an embodiment, the category-specific content consumption information may include, for each content item included in each category, information about at least one of whether a plurality of users have consumed content, a consumption time, or the number of times the content has been consumed.

In an embodiment, the memory 120 may store one or more instructions for obtaining user-specific heterogeneous content consumption information from category-specific content consumption information.

In an embodiment, the memory 120 may store one or more instructions for normalizing the user-specific heterogeneous content consumption information.

In an embodiment, the memory 120 may store one or more instructions for obtaining, from the normalized user-specific heterogeneous content consumption information, a consumption vector including consumption information of a plurality of users as elements, according to each content item included in each category.

In an embodiment, the memory 120 may store one or more instructions for obtaining a similarity between heterogeneous content by comparing a consumption vector for content included in a first category with a consumption vector for content included in a second category.

In an embodiment, the memory 120 may store the similarity between the heterogeneous content. The similarity between the heterogeneous content may be updated and stored based on category-specific content consumption information that is newly obtained in real time, at certain intervals, at random intervals, or whenever new category-specific content consumption information is obtained.

In an embodiment, the memory 120 may store one or more instructions for determining a second content item of a second category different from a first category, as recommended content for a user who has consumed a first content item of the first category, based on the similarity between the heterogeneous content.

In an embodiment, the memory 120 may store one or more instructions for, when a user has consumed a plurality of content items included in the first category, identifying consumption information for the plurality of content items.

In an embodiment, the memory 120 may store one or more instructions for identifying a content item that has been most frequently consumed from among the plurality of content items.

In an embodiment, the memory 120 may store one or more instructions for determining a content item of the second category, which has the highest similarity to the most frequently consumed content item, as the recommended content.

In an embodiment, the memory 120 may store one or more instructions for performing data augmentation.

In an embodiment, the memory 120 may store one or more instructions for identifying users having similar consumption information for content items included in the first category.

In an embodiment, the memory 120 may store one or more instructions for identifying, as similar users, users who have a history of consuming N or more identical content items among content included in the first category.

In an embodiment, the memory 120 may store one or more instructions for, by using consumption information of a user, who has a history of consumption of the second content item included in the second category, among the similar users, supplementing consumption information of a user, who has no history of consumption of the second content item included in the second category, among the similar users.

In an embodiment, the memory 120 may store one or more instructions for using a value, which is obtained by applying a weight less than 1 to the consumption information of the user who has the history of consumption, as the consumption information of the user who has no history of consumption.

In an embodiment, the memory 120 may store one or more instructions for generating information corresponding to the recommended content.

In an embodiment, the memory 120 may store one or more instructions for transmitting the information corresponding to the recommended content to an external device.

The processor 110 according to an embodiment controls all operations of the computing device 100. The processor 110 may execute the at least one instruction stored in the memory 120 to control the computing device 100 to operate. In an embodiment, the processor 110 may include one or more processors.

In an embodiment, at least one processor 110 may obtain category-specific content consumption information from at least one external device.

In an embodiment, the at least one processor 110 may obtain user-specific heterogeneous content consumption information from the category-specific content consumption information.

In an embodiment, the at least one processor 110 may obtain a similarity between heterogeneous content based on the user-specific heterogeneous content consumption information.

In an embodiment, the at least one processor may obtain, from the user-specific heterogeneous content consumption information, a consumption vector including consumption information of a plurality of users as elements, according to each content item included in each category.

In an embodiment, the at least one processor 110 may normalize the user-specific heterogeneous content consumption information and may obtain a consumption vector by using the normalized user-specific heterogeneous content consumption information.

In an embodiment, the at least one processor 110 may obtain a similarity between heterogeneous content by comparing a consumption vector for content included in a first category with a consumption vector for content included in a second category.

In an embodiment, the at least one processor 110 may determine, from among content included in the second category, a second content item having the highest similarity to a first content item, as recommended content.

In an embodiment, the at least one processor 110 may, when a user has consumed a plurality of content items included in the first category, identify consumption levels of the user for the plurality of content items.

In an embodiment, the at least one processor 110 may determine, as recommended content, a content item of the second category, which has the highest similarity to a content item having the highest consumption level among the plurality of content items.

In an embodiment, the at least one processor 110 may identify, among a plurality of content items, content having a consumption level greater than or equal to a threshold, and when a plurality of content items satisfy the threshold, determine heterogeneous content having the highest similarity to each of the plurality of content items as recommended content.

In an embodiment, the at least one processor 110 may perform augmentation on a history of consumption. To this end, the at least one processor 110 may identify users having similar consumption information for content items included in a same category.

In an embodiment, the at least one processor 110 may identify, as similar users, users who have a history of consuming N or more identical content items among content included in a same category, for example, the first category.

In an embodiment, the processor 110 may use consumption information of a user, who has a history of consumption of the second content item included in the second category, among the similar users, as consumption information of a user, who has no history of consumption of the second content item included in the second category, among the similar users.

In an embodiment, the at least one processor 110 may use a value, which is obtained by applying a weight less than 1 to the consumption information of the user who has the history of consumption, as the consumption information of the user who has no history of consumption.

In an embodiment, the at least one processor 110 may determine a second content item of a second category different from a first category, as recommended content for a user who has consumed a first content item of a first category, based on the similarity between the heterogeneous content.

In an embodiment, the at least one processor 110 may obtain information corresponding to the recommended content, in relation to the determined recommended content.

In an embodiment, the information corresponding to the recommended content may include at least one of information for identifying the recommended content and information for using the recommended content.

For example, the information corresponding to the recommended content may include a title of the recommended content, a thumbnail of the recommended content, a preview mage of the recommended content, an advertisement image of the recommended content, channel information for using the recommended content, a particular URL address on an external server or external OTT service provider server where the recommended content is stored, or the like.

In an embodiment, the information corresponding to the recommended content may include a reason for recommending the content or information about other content which has a high similarity to the content. For example, the computing device 100 may, while recommending game B to a user, include a reason for recommending game B and information implying that game B has a high similarity to movie A, such as "Game B is recommended for you who like movie A," in the form of a text or an audio signal.

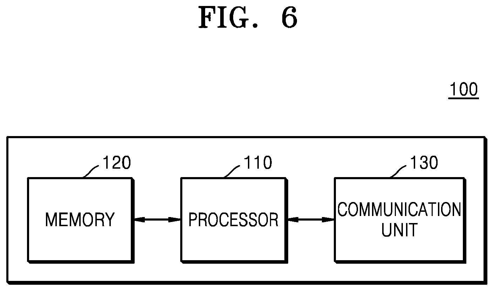

FIG. 6 is a block diagram of the computing device 100 according to an embodiment.

The computing device 100 of FIG. 6 may be an example of the computing device 100 of FIG. 5.

Hereinafter, redundant descriptions will be omitted.

Referring to FIG. 6, the computing device 100 may further include a communication unit 130 in addition to the memory 120 and the processor 110.

In an embodiment, the communication unit 130 may include at least one communication module capable of performing communication, according to the performance and structure of the computing device 100. The communication unit 130 may include at least one of a wireless LAN module, a Bluetooth module, or wired Ethernet.

The wireless LAN module may transmit or receive a Wi-Fi signal to or from a peripheral device according to the Wi-Fi communication standard.

The Bluetooth module may receive a Bluetooth signal transmitted from a peripheral device according to the Bluetooth communication standard. The Bluetooth module may correspond to a Bluetooth low energy (BLE) communication module, and may receive a BLE signal. The Bluetooth module may constantly or temporarily scan a BLE signal so as to detect whether a BLE signal is received.

In an embodiment, the communication unit 130 may connect the computing device 100 to a peripheral device, an external apparatus, an external server, an external device, or the like, under the control of the processor 110.

In an embodiment, the communication unit 130 may transmit or receive information to or from an external device by using web socket protocol-based or HyperText Transfer Protocol (HTTP)-based communication.

In an embodiment, the communication unit 130 may obtain category-specific content consumption information from an external device by using a wired or wireless communication network.

In an embodiment, at least one processor 110 may obtain user-specific heterogeneous content consumption information from the category-specific content consumption information, and may obtain a similarity between heterogeneous content based on the user-specific heterogeneous content consumption information.

In an embodiment, the at least one processor 110 may determine a second content item of a second category different from a first category, as recommended content for a user who has consumed a first content item of the first category, based on the similarity between the heterogeneous content.

In an embodiment, the at least one processor 110 may generate information corresponding to the recommended content.

In an embodiment, the communication unit 130 may transmit the information corresponding to the recommended content to an external device of the user who has consumed the first content item of the first category.

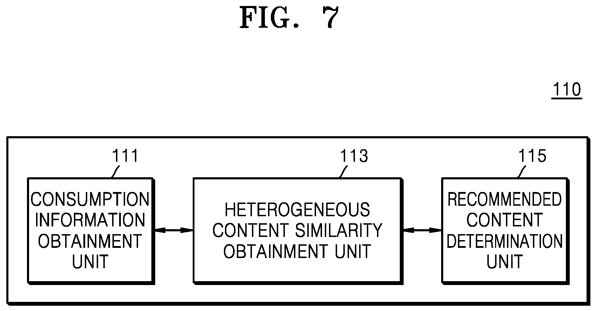

FIG. 7 is an internal block diagram of the processor 110 according to an embodiment.

The processor 110 of FIG. 7 may be an example of the processor 110 of FIG. 5 or 6.

Referring to FIG. 7, the processor 110 may include, as components, a consumption information obtainment unit 111, a heterogeneous content similarity obtainment unit 113, and a recommended content determination unit 115.

In an embodiment, the components included in the processor 110 may be modules. In an embodiment, a module may refer to a functional and structural combination of hardware for performing the technical concept of the present disclosure and software for operating the hardware. For example, the module may refer to preset code and a logical unit of a hardware resource for performing the preset code, but does not necessarily refer to physically connected code or one type of hardware.

The consumption information obtainment unit 111 according to an embodiment may be a module that generates user-specific heterogeneous content consumption information from category-specific content consumption information.

In an embodiment, the consumption information obtainment unit 111 may obtain category-specific content consumption information from a plurality of external devices.

In an embodiment, content consumption information may include information identifying content that has been consumed by a user and information indicating a consumption amount or a consumption level of the user for the content. For example, the content consumption information may include at least one of whether a consumer has consumed content, a consumption time, or the number of times the content has been consumed.

In an embodiment, content consumption information with respect to one category may be consumption information of a plurality of users with respect to a plurality of content items included in a same category. For example, when the category is movies, the category-specific content consumption information may include IDs of a plurality of users, identification information of at least one movie content item viewed by each user, viewing times or view counts of identified movie content, ratings, etc.

In an embodiment, the category-specific content consumption information may include, for each category, for example, for each of categories of movies, games, and masterpieces, consumption information of a plurality of users with respect to a plurality of content items included in the corresponding category.

In an embodiment, the consumption information obtainment unit 111 may arrange, for each user, content consumed by a corresponding user, based on at least one of the user's ID or account or user profile information.

For example, the consumption information obtainment unit 111 may generate a matrix expressing consumption information for movie content for each user ID, from content consumption information for a plurality of movie content items included in a movie category.

Similarly, the consumption information obtainment unit 111 may generate a matrix expressing consumption information for game content for each user ID, by processing content consumption information for a plurality of game content items included in a game category.

In an embodiment, the consumption information obtainment unit 111 may obtain user-specific heterogeneous content consumption information from category-specific content consumption information. In other words, the consumption information obtainment unit 111 may generate the user-specific heterogeneous content consumption information by integrating content consumption information with respect to different categories.

For example, the consumption information obtainment unit 111 may generate an integrated matrix expressing consumption information for user-specific heterogeneous content together, by combining consumption information for movie content and consumption information for game content for each user ID.

In an embodiment, the consumption information obtainment unit 111 may transmit the user-specific heterogeneous content consumption information to the heterogeneous content similarity obtainment unit 113.

The heterogeneous content similarity obtainment unit 113 according to an embodiment may receive the user-specific heterogeneous content consumption information from the consumption information obtainment unit 111 and may obtain a similarity between heterogeneous content by using the user-specific heterogeneous content consumption information.

In an embodiment, the heterogeneous content similarity obtainment unit 113 may obtain a consumption vector including consumption information of a plurality of users as elements, according to each of a plurality content items included in each category.

In an embodiment, the consumption vector may be a vector including consumption information of the plurality of users as elements, according to each content item included in each category.

For example, a consumption vector for a first movie content item among a plurality of movie content items may be a vector including consumption information of a plurality of users with respect to the first movie content item.

When a first user, a second user, a third user, ..., and an N^{th} user have consumed the first movie content item by amounts of a1, a2, a3, ..., and aN, respectively, the consumption vector for the first movie content item may be [a1, a2, a3, ..., aN)].

In an embodiment, the heterogeneous content similarity obtainment unit 113 may obtain M consumption vectors respectively for M movie content items included in a movie category.

Similarly, a consumption vector for a second game content item among a plurality of game content items may be a vector including consumption information of the plurality of users with respect to the second game content item. When the first user, the second user, the third user, ..., and the N^{th} user have consumed the second game content item by amounts of b1, b2, b3, ..., and bN, respectively, the consumption vector for the second game content item may be [b1, b2, b3, ..., bN].

In an embodiment, the heterogeneous content similarity obtainment unit 113 may obtain L consumption vectors respectively corresponding to L game content items included in a game category.

In an embodiment, the heterogeneous content similarity obtainment unit 113 may compare consumption vectors for heterogeneous content.

For example, in the above example, the heterogeneous content similarity obtainment unit 113 may obtain a similarity between the consumption vectors by comparing the M consumption vectors respectively corresponding to the M movie content items with the L consumption vectors respectively corresponding to the L game content items.

In an embodiment, the heterogeneous content similarity obtainment unit 113 may obtain a similarity between consumption vectors by using various methods.

In an embodiment, the heterogeneous content similarity obtainment unit 113 may obtain cosine similarity between consumption vectors. The cosine similarity is a method for measuring similarity between vectors by determining how similar the directions in which two vectors point are.

The cosine similarity is measured using a cosine value of the angle between two vectors in an inner product space. When the directions of the two vectors are completely identical, the cosine similarity has a value of 1, and when the vectors form an angle of 90°, it has a value of 0. The closer the cosine similarity is to 1, the higher the similarity.

In an embodiment, the heterogeneous content similarity obtainment unit 113 may obtain Jaccard similarity between consumption vectors. Jaccard similarity is a method for measuring similarity between two sets by obtaining the union and intersection of the two sets and calculating a ratio between the intersection and the union. If the two sets have no elements in common, the Jaccard similarity has a value of 0, and if all elements overlap, it has a value of 1.

In an embodiment, the heterogeneous content similarity obtainment unit 113 may obtain Pearson similarity between consumption vectors. The Pearson similarity may be obtained by performing normalization with a sample mean of each vector when two vectors are given, and determining cosine similarity.

However, this is one embodiment, and the heterogeneous content similarity obtainment unit 113 may obtain a similarity between consumption vectors for heterogeneous content by using various methods.

In an embodiment, the heterogeneous content similarity obtainment unit 113 may obtain a similarity between consumption vectors for heterogeneous content and may generate a similarity matrix including the heterogeneous content respectively as rows and columns. For example, the similarity matrix may be a matrix which includes a plurality of movie content items as rows, includes a plurality of game content items as columns, and includes a similarity between a movie and a game as an element of the matrix.

In an embodiment, the heterogeneous content similarity obtainment unit 113 may transmit the similarity between the consumption vectors for the heterogeneous content to the recommended content determination unit 115.

In an embodiment, the recommended content determination unit 115 may receive the similarity between the consumption vectors from the heterogeneous content similarity obtainment unit 113 and may determine recommended content suitable for a user by using the same.

In an embodiment, the recommended content determination unit 115 may determine a particular content item, for example, a second content item, of a second category different from a first category, as recommended content for a user who has consumed a particular content item, for example, a first content item, of the first category, based on the similarity between the heterogeneous content.

In an embodiment, the recommended content determination unit 115 may identify, by using content consumption information of a recommendation target user, content consumed by the user. In an embodiment, the recommended content determination unit 115 may determine heterogeneous content, which has the highest similarity to the content consumed by the recommendation target user, as recommended content to recommend to the recommendation target user.

For example, when the recommendation target user is a first user, the recommended content determination unit 115 may identify content consumed by the user, as a first movie content item, by using content consumption information of the first user.

The recommended content determination unit 115 may determine, from among game content, a second game content item having the highest similarity to the first movie content item, as recommended content to recommend to the first user.

In an embodiment, the first user may have consumed a plurality of content items. In this case, the recommended content determination unit 115 may determine heterogeneous recommended content using various methods.

For example, it is assumed that the first user has consumed a plurality of movie content items, for example, first to fourth movie content items. In this case, the recommended content determination unit 115 may identify consumption levels of the first user for the first to fourth movie content items. The recommended content determination unit 115 may, when the first user has consumed the third movie content item the most among the plurality of movie content items, determine a third' game content item having the highest similarity to the third movie content item, as recommended content.

Alternatively, the recommended content determination unit 115 may identify movie content that has been consumed by a threshold or more, from among the first to fourth movie content items consumed by the first user, and may determine game content items, which have high similarities to the movie content that has been consumed by the threshold or more, as recommended content. For example, when the user has consumed all of the first to fourth movie content items, but has watched only the first movie content item and the second movie content item by a threshold or more, for example, for 50 minutes or more, among them, the recommended content determination unit 115 may determine only a first' game content item and a second' game content item, which have the highest similarities respectively to the first movie content item and the second movie content item, as recommended content.

In an embodiment, the recommended content determination unit 115 may determine all of game content items, which have the highest similarities respectively to the first to fourth movie content items, as recommended content. For example, when game content items, which have the highest similarities respectively to the first to fourth movie content items, are first' to fourth' game content items, the recommended content determination unit 115 may determine all of the first' to fourth' game content items as recommended content.

Here, the recommended content determination unit 115 may determine the recommended content by assigning the same priority to the first' to fourth' game content items. Alternatively, the recommended content determination unit 115 may assign priorities based on a consumption level of the first user with respect to the first to fourth movie content items, such that game content items having the highest similarity to movie content items having a higher consumption level are given higher priority, and may recommend the game content items in an order from first priority to fourth priority.

Alternatively, the recommended content determination unit 115 may, when game content items, which have the highest similarities respectively to the first to fourth movie content items consumed by the first user, partially overlap, determine recommended content by prioritizing the overlapping game content items. For example, when game content items, which have the highest similarities respectively to the first to fourth movie content items, are the first' game content item, the second' game content item, the second' game content item, and the fourth' game content item, respectively, the recommended content determination unit 115 may prioritize the overlapping second' game content item among the game content items and may determine the second' game content item as recommended content of a first priority.

However, this is one embodiment, and the recommended content determination unit 115 may determine recommended content via various methods by using a similarity between heterogeneous content.

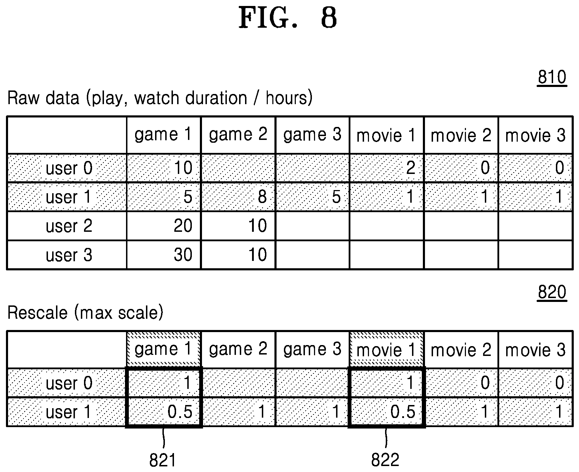

FIG. 8 is a drawing illustrating the computing device 100 obtaining user-specific heterogeneous content consumption information, according to an embodiment.

In an embodiment, the computing device 100 may obtain category-specific content consumption information.

In an embodiment, the computing device 100 may obtain user-specific heterogeneous content consumption information by processing the category-specific content consumption information.

For example, the computing device 100 may obtain consumption information of a plurality of users with respect to a plurality of content items included in a game category and a movie category.

In an embodiment, the consumption information of the plurality of users with respect to each of the game category and the movie category may include the plurality of users' IDs, identification information of content consumed by each user, a time for which identified content is played or viewed, or the number of times the identified content is played or viewed.

In an embodiment, the computing device 100 may obtain consumption information for at least one content item consumed by a user via at least one external device, by using the user's ID or account.

In an embodiment, the computing device 100 may arrange, for each user's ID or account, consumption information for content consumed by a corresponding user.

In an embodiment, the computing device 100 may generate user-specific heterogeneous content consumption information by integrating content consumption information with respect to different categories.

Referring to FIG. 8, in an embodiment, the computing device 100 may generate an integrated matrix 810 expressing consumption information for game 1 to game 3 as well as consumption information for movie 1 to movie 3 for each user ID.

For example, the integrated matrix 810 may be a form including a plurality of users as rows and category-specific content, i.e., game content and movie content, as columns. The integrated matrix 810 may include consumption levels for the game content and the movie content as an element, for each user.

According to categories, consumption information may be obtained by using different units or criteria.

The integrated matrix 810 shown in FIG. 8 shows a case in which the consumption information with respect to the game category and the movie category are expressed in different units. In other words, the integrated matrix 810 of FIG. 8 shows a case in which consumption information for a movie is expressed as a movie viewing time and consumption information for a game is expressed as the number of game plays. There is an issue that the time and the number have different units and ranges and thus are difficult to compare.

In an embodiment, the computing device 100 may scale/normalize the user-specific heterogeneous content consumption information. In an embodiment, the computing device 100 may perform min-max scaling/normalization to redefine a characteristic range of values of different variables included in consumption information, thereby ensuring that the values of different variables included in the consumption information fall within a certain range.

For example, the computing device 100 may limit both a range of movie viewing time and the number of game plays to a maximum value of 1, and may fix a minimum value to 0. In addition, the computing device 100 may assign a minimum value of 0 when no consumption has occurred at all and may assign a value greater than 1 when a game has been played or a movie has been watched for even 1 minute, thereby allowing consumption levels to have different values according to whether content has been consumed.

In an embodiment, the computing device 100 may generate a normalized integrated matrix 820 by normalizing the elements of the integrated matrix 810. The normalized integrated matrix 820 may be a matrix in which category-specific content consumption information of a plurality of users is normalized into elements with a maximum value of 1 and a minimum value of 0.

In an embodiment, the computing device 100 may use consumption information of only a user who has consumed all of heterogeneous content. For example, referring to the integrated matrix 810, it may be seen that user 0 and user 1 are users who have histories of consuming both games and movies, but user 2 and user 3 played only games and did not watch movies.

In an embodiment, the computing device 100 may use only consumption information of user 0 and user 1, who are users who consumed all of heterogeneous content, and may not use but discard consumption information of user 2 and user 3, who did not consume all of heterogeneous content.

Reference numeral 820 of FIG. 8 denotes the normalized integrated matrix 820. It may be seen that the normalized integrated matrix 820 includes only the consumption information of user 0 and user 1, who consumed both games and movies, in a normalized form.

In an embodiment, the computing device 100 may obtain, as a consumption vector, a vector including consumption information of a plurality of users as elements, according to each content item included in each category.

For example, the computing device 100 may obtain, from the normalized integrated matrix 820, a first game consumption vector [1, 0.5] including consumption information 821 of a plurality of users with respect to game 1 as elements. In addition, the computing device 100 may obtain, from the normalized integrated matrix 820, a first movie consumption vector [1, 0.5] including consumption information 822 of the plurality of users with respect to movie 1 as elements.

Via this method, the computing device 100 may obtain consumption information of the users with respect to game 1 to game 3, as a first game consumption vector to a third game consumption vector, respectively. In addition, the computing device 100 may obtain consumption information of the users with respect to movie 1 to movie 3, as a first movie consumption vector to a third movie consumption vector, respectively.

In an embodiment, the computing device 100 may obtain a similarity between vectors by respectively comparing the game consumption vectors with the movie consumption vectors.

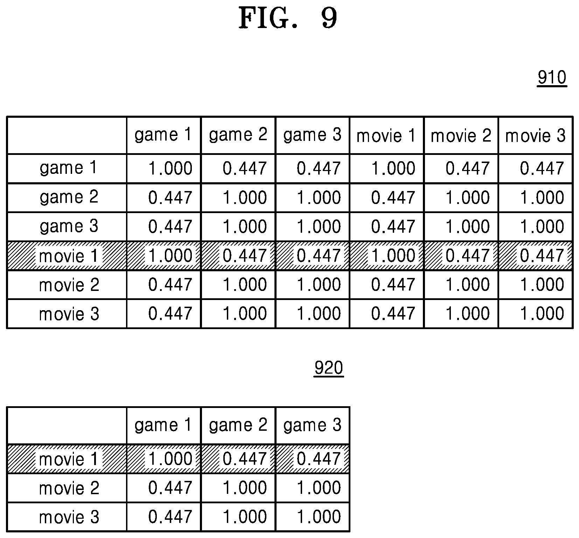

FIG. 9 is a drawing illustrating the computing device 100 obtaining a first similarity matrix 910 by using the normalized integrated matrix 820 of FIG. 8, according to an embodiment.

In an embodiment, the computing device 100 may obtain a similarity between vectors by using the consumption vectors obtained via the method described in FIG. 8.

The similarity between the vectors may be obtained by respectively comparing the first game consumption vector to the third game consumption vector with the first movie consumption vector to the third movie consumption vector.

In an embodiment, the computing device 100 may generate a similarity matrix expressing the similarity between the consumption vectors.

As shown in FIG. 9, the computing device 100 may generate the first similarity matrix 910 including all of game 1 to game 3 and movie 1 to movie 3 as rows and columns. The computing device 100 may obtain similarities between vectors by respectively comparing the first game consumption vector to the third game consumption vector and the first movie consumption vector to the third movie consumption vector with the first game consumption vector to the third game consumption vector and the first movie consumption vector to the third movie consumption vector, and may generate the first similarity matrix 910 in the form including the similarities between the vectors as elements.

In an embodiment, the computing device 100 may obtain a second similarity matrix 920 including only a result of comparing consumption vectors between heterogeneous content as an element in the first similarity matrix 910.

In an embodiment, the computing device 100 may obtain the second similarity matrix 920 including first to third movies as rows and including first to third games as columns, by using similarities between only different heterogeneous content items from the first similarity matrix 910.

In an embodiment, without generating the first similarity matrix 910, the computing device 100 may generate the second similarity matrix 920 by comparing only consumption vectors between heterogeneous content from the beginning. The computing device 100 may obtain similarities between consumption vectors for heterogeneous content by respectively comparing the first movie consumption vector to the third movie consumption vector with the first game consumption vector to the third game consumption vector, that is, by calculating only 3X3 inter-vector similarities, and may generate the second similarity matrix 920 in the form including the similarities between the consumption vectors for the heterogeneous content as elements of the matrix.

In an embodiment, the computing device 100 may recommend heterogeneous content to a user by using the second similarity matrix 920.

For example, in FIG. 9, when the computing device 100 identifies, from content consumption information of a recommendation target user, that the user has consumed movie 1, the computing device 100 may determine game 1, which has the highest similarity to movie 1 among game content included in a game category, as content to be recommended to the user.

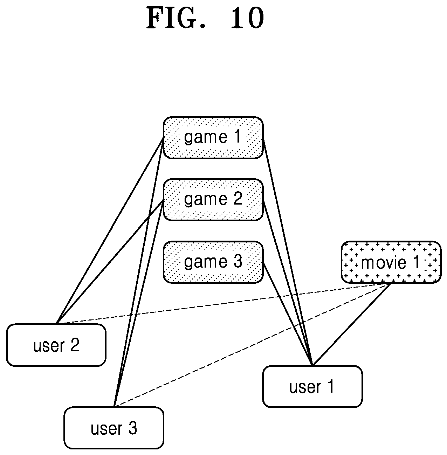

FIG. 10 is a drawing illustrating the computing device 100 performing data augmentation, according to an embodiment.

FIG. 10 illustrates that user 1 is a user who has played games and watched a movie, but user 2 and user 3 are users who have played only games and have not watched movies.

The more users there are who have simultaneously consumed heterogeneous content, the higher the accuracy of a similarity matrix becomes. However, even in case in which there are not many users who have simultaneously consumed heterogeneous content, when the computing device 100 uses consumption information of only a user who has consumed all of heterogeneous content, game content consumption information of user 2 and user 3, who have consumed only one type of content, is discarded without being used, in the drawing shown in FIG. 10. In this case, there is an issue that recommendation quality also decreases because the amount of available data is small.

In an embodiment, the computing device 100 may perform data augmentation by using consumption information of a user who has consumed a plurality of homogeneous content items.

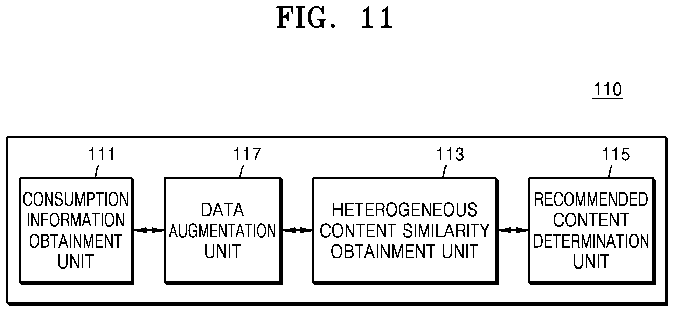

Hereinafter, referring to FIG. 11, it will be described that the computing device 100 augments data.

FIG. 11 is an internal block diagram of the processor 110 according to an embodiment.

The processor 110 of FIG. 11 may be an example of the processor 110 of FIG. 7. The same description as that made with reference to FIG. 7 will be omitted.

Referring to FIG. 11, the processor 110 may further include a data augmentation unit 117, in addition to the consumption information obtainment unit 111, the heterogeneous content similarity obtainment unit 113, and the recommended content determination unit 115.

In an embodiment, the consumption information obtainment unit 111 may generate user-specific heterogeneous content consumption information from category-specific content consumption information.

In an embodiment, the consumption information obtainment unit 111 may transmit the user-specific heterogeneous content consumption information to the data augmentation unit 117.

The data augmentation unit 117 according to an embodiment may be a module that expands data based on the user-specific heterogeneous content consumption information received from the consumption information obtainment unit 111.

In an embodiment, the data augmentation unit 117 may expand data by adding consumption information of users, who have consumed only one type of content, with respect to heterogeneous content, thereby increasing recommendation quality.

In an embodiment, the data augmentation unit 117 may identify users who have similar consumption information for content items included in a same category.

In an embodiment, similar users may be users who have histories of consuming N or more identical content items (where N is a natural number of 2 or more) among content included in a same category. A value of N may vary according to consumption information of users. For example, the more users there are who have histories of consuming identical content items among content included in a same category, the larger the value of N may become.

In the drawing of FIG. 10 described above, for example, when N is 2, because all of users 1, 2, and 3 have consumed two or more identical content items, i.e., games 1 and 2, among content included in a same category, i.e., a game category, the data augmentation unit 117 may determine that users 1, 2, and 3 have similar game preferences and may identify users 1, 2, and 3 as similar users.

In an embodiment, the data augmentation unit 117 may supplement consumption information of a user who has no history of consumption of heterogeneous content, by using heterogeneous content consumption information of similar users.

For example, in the above example, because user 1 among users 1, 2, and 3 identified as similar users has played games and watched movie 1, the data augmentation unit 117 may perform augmentation on consumption information of user 2 and user 3 by deeming that user 2 and user 3, who have not watched movies among the similar users, have also watched movie 1. In other words, the data augmentation unit 117 may generate consumption information of user 2 and user 3 with respect to heterogeneous content, by adding consumption information for movie 1 to the consumption information of user 2 and user 3.

However, unlike user 1, user 2 and user 3 have not actually watched movie 1, and thus, the data augmentation unit 117 may downwardly adjust consumption information of user 1 with respect to movie 1, according to a certain criterion, and then add the adjusted consumption information as consumption information of user 2 and user 3, instead of directly using the consumption information of user 1 with respect to movie 1.

As such, according to an embodiment, the computing device 100 may expand data by using data of all of user 1 to user 3 in FIG. 10, via a data augmentation process.

In an embodiment, the data augmentation unit 117 may transmit the user-specific heterogeneous content consumption information, on which data augmentation is performed, to the heterogeneous content similarity obtainment unit 113.

In an embodiment, the heterogeneous content similarity obtainment unit 113 may obtain a similarity between heterogeneous content by using the user-specific heterogeneous content consumption information, on which data augmentation is performed.

In an embodiment, the recommended content determination unit 115 may recommend recommended content to a recommendation target user, based on the similarity between the heterogeneous content generated by the heterogeneous content similarity obtainment unit 113.

As such, according to an embodiment, the computing device 100 may expand data via a data augmentation process and may determine recommended content by using the expanded data, thereby increasing recommendation quality.

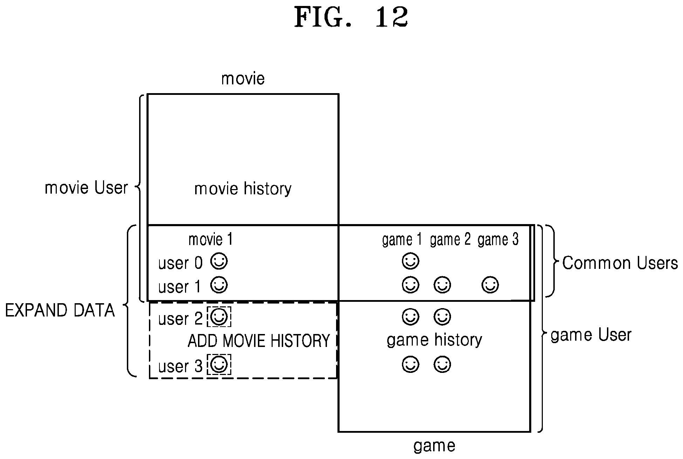

FIG. 12 is a drawing illustrating the computing device 100 performing data augmentation, according to an embodiment.

FIG. 12 illustrates a case in which user 0 and user 1 are common users who have histories of consuming both games and movies, whereas user 2 and user 3 are common users who have histories of consuming only games.

When the computing device 100 does not perform data augmentation, the computing device 100 may provide a recommendation service by using only heterogeneous content consumption information of user 0 and user 1 who are common users who have consumed all of heterogeneous content.

In an embodiment, the computing device 100 may identify users who have similar consumption information for content items included in a same category, to perform data augmentation.

For example, in FIG. 12, the computing device 100 may identify, as similar users, users who have histories of consuming two or more content items together among game content of a same category. The computing device 100 may identify user 1, user 2, and user 3 as similar users because all of user 1, user 2, and user 3 have played game 1 and game 2.

In an embodiment, the computing device 100 may add consumption information for movie 1 to movie content consumption information of user 2 and user 3, based on user 1 consuming movie 1 corresponding to heterogeneous content among user 1, user 2, and user 3 identified as the similar users.

In an embodiment, the computing device 100 may provide a recommendation service by using the content consumption information of user 2 and user 3 expanded via data augmentation, along with the consumption information of user 0 and user 1 who have consumed all of the heterogeneous content.

As such, the computing device 100 may determine recommended content based on richer data, by expanding heterogeneous content consumption information via data augmentation.

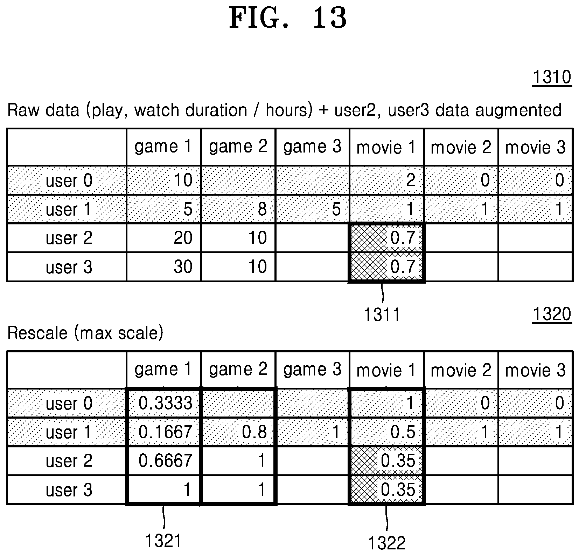

FIG. 13 is a drawing illustrating the computing device 100 obtaining user-specific heterogeneous content consumption information, according to an embodiment.

In an embodiment, the computing device 100 may obtain category-specific content consumption information from a plurality of external devices and may obtain user-specific heterogeneous content consumption information by processing the category-specific content consumption information.

For example, the computing device 100 may obtain consumption information of a plurality of users with respect to a plurality of content items included in a game category and a movie category.

In an embodiment, the computing device 100 may generate user-specific heterogeneous content consumption information by integrating content consumption information with respect to different categories and arranging, for each user, content consumed by a corresponding user.

As shown in FIG. 13, the computing device 100 may generate an integrated matrix 1310 expressing consumption information of each of user 0, user 1, user 2, and user 3 with respect to game 1 to game 3 as well as consumption information for movie 1 to movie 3. Each element of the integrated matrix 1310 may represent, for each user, a consumption level of a corresponding user for game content and movie content.

For example, it is assumed that user 2 and user 3 have played only games and have not watched movies. The computing device 100 may identify user 1, user 2, and user 3 as similar users because user 1, user 2, and user 3 have played a plurality of identical game content items, that is, game 1 and game 2. The computing device 100 may supplement consumption information of a user who has no history of consumption of heterogeneous content, among the similar users, by using consumption information of a user who has watched a movie corresponding to heterogeneous content, among the similar users.

In other words, the computing device 100 may add consumption information of user 1 with respect to movie 1 as consumption information of user 2 and user 3 with respect to movie 1.

User 2 and user 3 have not actually consumed movie 1, and thus, the computing device 100 may downwardly adjust the consumption information of user 1 with respect to movie 1, according to a certain criterion, and then add the adjusted consumption information as the consumption information of user 2 and user 3, instead of directly using the consumption information of user 1 with respect to movie 1 as the consumption information of user 2 and user 3.

For example, as in FIG. 13, the computing device 100 may apply a weight of 0.7 to a consumption information value of 1 for user 1 with respect to movie 1, to add 0.7 as a consumption information value for user 2 and user 3 with respect to movie 1. In FIG. 3, reference numeral 1311 denotes added consumption information.

In FIG. 8 described above, the computing device 100 uses consumption information of only users who have consumed all of heterogeneous content, but in FIG. 13, the computing device 100 generates the integrated matrix 1310 by supplementing consumption information of users who have no history of consumption of heterogeneous content by using consumption information of users identified as similar users, and thus, the integrated matrix 1310 of FIG. 13 may be differentiated from the integrated matrix 810 of FIG. 8.

The integrated matrix 1310 shown in FIG. 13 shows a case in which the consumption information with respect to the game category represents the number of times a game is used and the consumption information with respect to the movie category represents a time for which a movie is viewed.

In an embodiment, the computing device 100 may ensure that values of different variables representing consumption information fall within a certain range, by normalizing the user-specific heterogeneous content consumption information. In an embodiment, the computing device 100 may limit consumption information for each heterogeneous content to a range of a minimum value of 0 to a maximum value of 1.

Reference numeral 1320 of FIG. 13 denotes a normalized integrated matrix 1320. It may be seen that unlike the normalized integrated matrix 820 shown in FIG. 8, the normalized integrated matrix 1320 shown in FIG. 13 includes, in a normalized form, not only the consumption information of user 0 and user 1 who have consumed both games and movies, but also the consumption information of user 2 and user 3.

In an embodiment, the computing device 100 may obtain a consumption vector from the normalized integrated matrix 1320.

In an embodiment, the computing device 100 may obtain a consumption vector including consumption information of a plurality of users as elements, according to each content item included in each category.

For example, the computing device 100 may obtain, as [0.3333, 0.1667, 0.6667, 1], a first game consumption vector including consumption information 1321 of a plurality of users with respect to game 1 as elements, in the normalized integrated matrix 1320.

In addition, the computing device 100 may obtain, from the normalized integrated matrix 1320, a first movie consumption vector [1, 0.5, 0.35, 0.35] including consumption information 1322 of the plurality of users with respect to movie 1 as elements.

It may be seen that unlike the first game consumption vector [1, 0.5] and the first movie consumption vector [1, 0.5], which are obtained from the normalized integrated matrix 820 of FIG. 8, the first game consumption vector and the first movie consumption vector, which are obtained from the normalized integrated matrix 1320 of FIG. 13, exhibit increased expressive power due to an increase in vector dimensionality.

In an embodiment, the computing device 100 may obtain similarities between vectors by respectively comparing three game consumption vectors with three movie consumption vectors.

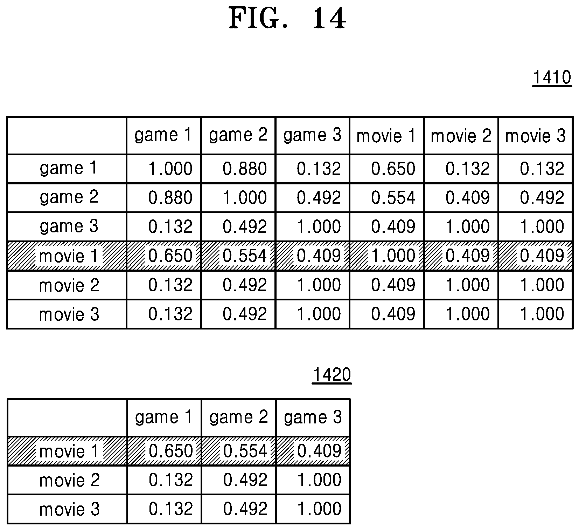

FIG. 14 is a drawing illustrating the computing device 100 obtaining a similarity matrix by using the normalized integrated matrix 1320 of FIG. 13, according to an embodiment.

In an embodiment, the computing device 100 may obtain similarities between vectors by respectively comparing the first game consumption vector to the third game consumption vector with the first movie consumption vector to the third movie consumption vector.

In an embodiment, the computing device 100 may obtain a similarity between consumption vectors via various methods. For example, the computing device 100 may obtain a similarity between vectors by using cosine similarity. In this regard, because vectors are normalized to have a maximum length of 1, the cosine similarity may be easily obtained via an inner product between vectors.

However, the present disclosure is not limited thereto, the computing device 100 may obtain a similarity between vectors by using Jaccard similarity, Pearson similarity, or other various methods.

In an embodiment, the computing device 100 may generate a first similarity matrix 1410 including all of game 1 to game 3 and movie 1 to movie 3 as rows and columns and including a similarity between vectors as an element.

In an embodiment, the computing device 100 may obtain a second similarity matrix 1420 including first to third movies as rows and including first to third games as columns, by extracting similarities between only different heterogeneous content items from the first similarity matrix 1410.

In an embodiment, without generating the first similarity matrix 1410, the computing device 100 may directly obtain the second similarity matrix 1420 by comparing only consumption vectors of heterogeneous content.

In an embodiment, the computing device 100 may recommend heterogeneous content to a user by using the second similarity matrix 1420.

For example, in FIG. 14, it is assumed that the computing device 100 has identified, from content consumption information of a recommendation target user, that the user has consumed movie 1.

The computing device 100 may determine game 1, which is a game having the highest similarity to movie 1 among game content, as recommended content to recommend to the recommendation target user.

Alternatively, the computing device 100 may determine game 1 and game 2, which are games each having a similarity to movie 1 that is greater than a reference value of 0.5 among game content, as recommended content to recommend to the recommendation target user. In this regard, the computing device 100 may recommend game 1 and game 2 as recommended content without priority, or may prioritize game 1, which has a higher similarity, to recommend game 1 first and recommend game 2 subsequently.

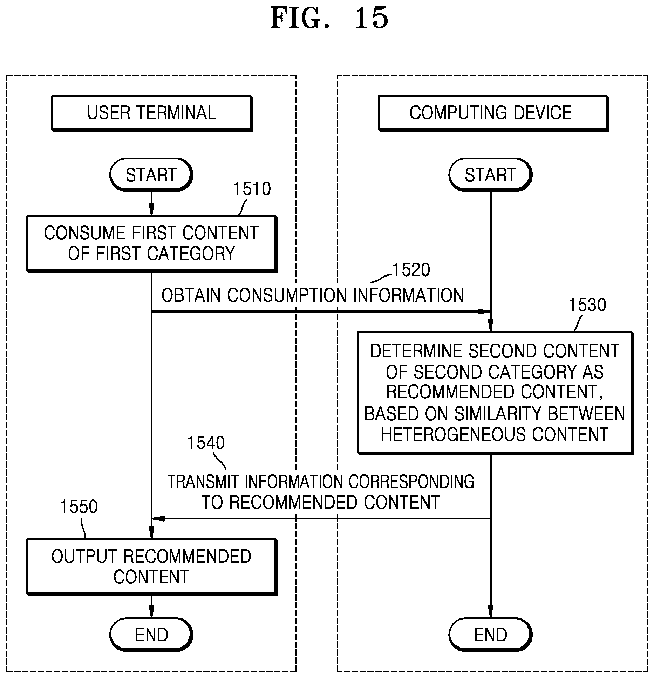

FIG. 15 is a flowchart illustrating an operating method of a computing device, according to an embodiment.

Referring to FIG. 15, a computing device may transmit or receive information to or from an external device via a communication network.

In an embodiment, the external device may consume content of a first category (operation 1510).

In an embodiment, the computing device may obtain consumption information from the external device (operation 1520).

In an embodiment, the computing device may determine a second content item of a second category as recommended content, based on a similarity between heterogeneous content (operation 1530).

In an embodiment, the computing device may transmit information corresponding to the recommended content to the external device (operation 1540).

In an embodiment, the external device may output the recommended content (operation 1550).

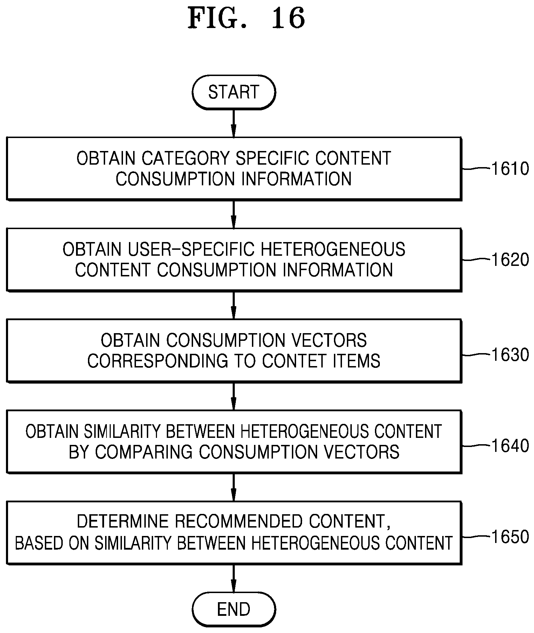

FIG. 16 is a flowchart illustrating an operating method of a computing device, according to an embodiment.

Referring to FIG. 16, a computing device may transmit or receive information to or from an external device via a communication network.

In an embodiment, the computing device may obtain category-specific content consumption information (operation 1610).

In an embodiment, the computing device may obtain user-specific heterogeneous content consumption information (operation 1620).

In an embodiment, the computing device may obtain the user-specific heterogeneous content consumption information, by arranging the category-specific content consumption information for each user and integrating the heterogeneous content consumption information.

In an embodiment, the computing device may obtain consumption vectors corresponding to content items (operation 1630).

In an embodiment, the computing device may obtain, from the user-specific heterogeneous content consumption information, a consumption vector including consumption information of a plurality of users as elements, according to each content item included in each category.

In an embodiment, the computing device may obtain a similarity between heterogeneous content by comparing the content-specific consumption vectors (operation 1640).

In an embodiment, the computing device may obtain the similarity between the heterogeneous content by comparing consumption vectors for content included in different categories.

In an embodiment, the computing device may determine recommended content based on the similarity between the heterogeneous content (operation 1650).

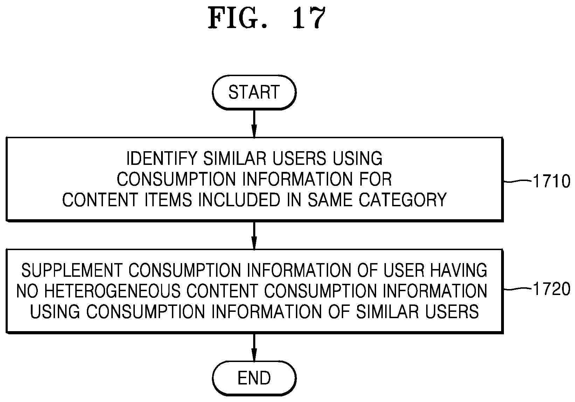

FIG. 17 is a flowchart illustrating a method, performed by a computing device, of performing data augmentation, according to an embodiment.

Referring to FIG. 17, in an embodiment, a computing device may identify similar users.

In an embodiment, the computing device may identify similar users using consumption information for content items included in a same category (operation 1710).

In an embodiment, the computing device may identify, as similar users, users who have histories of consuming N or more identical content items among content included in a same category.

In an embodiment, the computing device may supplement consumption information of a user having no heterogeneous content consumption information using consumption information of the similar users (operation 1720).

In an embodiment, the computing device may use a value, which is obtained by applying a weight to consumption information of a user who has a history of consumption of heterogeneous content among the similar users, as consumption information of a user who has no history of consumption.

In an embodiment, the computing device may use a value, which is obtained by applying a weight less than 1 to the consumption information of the user who has the history of consumption, as the consumption information of the user who has no history of consumption.

According to some embodiments, a method of operating a computing device and the computing device may also be implemented in the form of a recording medium including computer-executable instructions, such as program modules, executable by a computer. A computer-readable recording medium may be any available media that are accessible by the computer and may include any volatile and non-volatile media and any removable and non-removable media. In addition, the computer-readable recording medium may include both a computer storage medium and a communication medium. The computer storage medium includes all volatile/nonvolatile and removable/non-removable media implemented by a certain method or technology for storing information such as computer-readable instructions, a data structure, a program module, or other data. The communication medium generally includes computer-readable instructions, a data structure, a program module, other data of a modulated data signal such as a carrier wave, or another transmission mechanism, and examples thereof includes an arbitrary information transmission medium.

In addition, the computing device and the operating method thereof, according to an embodiment of the present disclosure, as described above may be implemented as a computer program product including a computer-readable recording medium/storage medium having recorded thereon a program for implementing the operating method of the computing device, the operating method including obtaining a similarity between heterogeneous content based on user-specific heterogeneous content consumption information obtained from category-specific content consumption information, and determining a second content item of a second category different from a first category, as recommended content for a user who has consumed a first content item of the first category, based on the similarity between the heterogeneous content.

The computer-readable storage medium may be provided in the form of a non-transitory storage medium. The "non-transitory storage medium" is a tangible device and only means not including a signal (for example, electromagnetic waves), and this term does not distinguish between a case where data is semi-permanently stored in a storage medium and a case where data is temporarily stored in a storage medium. For example, the "non-transitory storage medium" may include a buffer in which data is temporarily stored.

According to an embodiment, the methods according to various embodiments disclosed herein may be provided while being included in a computer program product. The computer program product may be traded as merchandise between a seller and a purchaser. The computer program product may be distributed in the form of a device-readable storage medium (for example, compact disc ROM (CD-ROM)), or may be distributed (for example, downloaded or uploaded) online either via an application store or directly between two user devices (for example, smartphones). In the case of the online distribution, at least a part of a computer program product (for example, downloadable app) is stored at least temporarily on a device-readable storage medium, such as a server of a manufacturer, a server of an application store, or memory of a relay server, or may be temporarily generated.

## Claims

1. A computing device (100) comprising:
memory (120) storing at least one instruction; and
at least one processor (110) configured to execute the at least one instruction stored in the memory,
wherein the at least one processor is configured to obtain a similarity between heterogeneous content based on user-specific heterogeneous content consumption information obtained from category-specific content consumption information, and
provide a second content item of a second category as recommended content to a user who has consumed a first content item of a first category, based on the similarity between the heterogeneous content.

2. The computing device of claim 1, further comprising a communication unit (130) configured to transmit or receive a signal to or from at least one external device,
wherein the at least one processor is configured to obtain the category-specific content consumption information from the at least one external device via the communication unit, and
transmit information corresponding to the recommended content to an external device of the user.

3. The computing device of claim 1 or 2, wherein the category-specific content consumption information comprises, for each content item included in each category, information about at least one of whether a plurality of users have consumed content, a consumption time, or a number of times the content has been consumed.

4. The computing device of any one of claims 1 to 3, wherein the at least one processor is configured to
obtain, from the user-specific heterogeneous content consumption information, a consumption vector comprising consumption information of a plurality of users for each content item included in each category, and obtain the similarity between the heterogeneous content by comparing a consumption vector for content items included in the first categry with a consumption vector for content items included in the second category.

5. The computing device of claim 4, wherein the at least one processor is configured to
normalize the user-specific heterogeneous content consumption information, and
obtain the consumption vector by using the normalized user-specific heterogeneous content consumption information.

6. The computing device of any one of claims 1 to 5, wherein the at least one processor is configured to
identify, from among content included in the second category, the second content item having a highest similarity to the first content item, as the recommended content.

7. The computing device of any one of claims 1 to 6, wherein the at least one processor is configured to identify, as the recommended content, a content item of the second category having a highest similarity to a content item having a highest consumption level among a plurality of content items included in the first category.

8. The computing device of any one of claims 1 to 7, wherein the at least one processor is configured to
identify users having similar consumption information for content items included in the first category, and
by using consumption information of a user, who has a history of consumption of the second content item included in the second category, among the users having similar consumption information, supplement consumption information of a user, who has no history of consumption of the second content item included in the second category, among the users having similar consumption information.

9. The computing device of claim 8, wherein the at least one processor is configured to
identify, as the users having similar consumption information, users who have a history of consuming N or more identical content items among content items included in the first category.

10. The computing device of claim 8 or 9, wherein the at least one processor is configured to
use a value, which is obtained by applying a weight less than 1 to the consumption information of the user who has the history of consumption, as the consumption information of the user who has no history of consumption.

11. An operating method of a computing device, comprising:
obtaining a similarity between heterogeneous content based on user-specific heterogeneous content consumption information obtained from category-specific content consumption information; and
providing a second content item of a second category as recommended content to a user who has consumed a first content item of a first category, based on the similarity between the heterogeneous content.

12. The operating method of claim 11, further comprising: obtaining the
category-specific content consumption information from at least one external device; and
transmitting information corresponding to the recommended content to an external device of the user.

13. The operating method of claim 11 or 12, wherein the obtaining of the similarity between the heterogeneous content comprises:
obtaining, from the user-specific heterogeneous content consumption information, a consumption vector comprising consumption information of a plurality of users for each content item included in each category, and
obtaining the similarity between the heterogeneous content by comparing a consumption vector for content items included in the first category with a consumption vector for content items included in the second category.

14. The operating method of claim 13, wherein the obtaining of the similarity between the heterogeneous content further comprises normalizing the user-specific heterogeneous content consumption information, and
the obtaining of the consumption vector comprises obtaining the consumption vector from the normalized user-specific heterogeneous content consumption information.

15. A computer-readable recording medium having recorded thereon a program for performing the method of any one of claims 11 to 14 on a computer.
